Europäisches Patentamt

European Patent Office

Office européen des brevets

(19)

(11) Numéro de publication: **0 114 443**
**B1**

(12) **FASCICULE DE BREVET EUROPEEN**

(45) Date de publication du fascicule du brevet: **12.10.88**

(51) Int. Cl.⁴: **B 23 B 29/04**, B 23 Q 3/155

(21) Numéro de dépôt: **83201837.8**

(22) Date de dépôt: **23.12.83**

(54) **Support d'outil pour machine-outil.**

(30) Priorité: **23.12.82 CH 7523/82**

(43) Date de publication de la demande:
**01.08.84 Bulletin 84/31**

(45) Mention de la délivrance du brevet:
**12.10.88 Bulletin 88/41**

(84) Etats contractants désignés:
**AT BE CH DE FR GB IT LI NL SE**

(56) Documents cités:
**DD-A- 110 623**
**DE-A-2 629 563**

**MASCHINENMARKT, vol. 82, no. 78, 1976,**
**pages 1414-1416, 1425, Würzburg; R. BALLACH**
**"Hohe Zerspanungsleistungen beim Drehen**
**mit Werkzeugträgersystemen sichern"**

**DEUTSCHE NORMEN, DIN 69880, partie 1,**
**Septembre 1983, pages 1-3, Berlin;**
**"Werkzeughalter mit Zylinderschaft"**
**VDI 3425 Blatt 1 und 2**

(73) Titulaire: **PCM WILLEN S.A. Outillages de**
**précision**
**CH-1844 Villeneuve (CH)**

(72) Inventeur: **Willen, Charles**
**Route du Stand, 14**
**CH-1844 Villeneuve (CH)**

(74) Mandataire: **Meylan, Robert Maurice et al**
**c/o BUGNION S.A. 10, route de Florissant Case**
**Postale 375**
**CH-1211 Genève 12 - Champel (CH)**

Courier Press, Leamington Spa, England.

## Description

La présente invention a pour objet un support d'outil pour machine-outil comprenant un corps de support monolithique présentant au moins un logement dans lequel est fixé amoviblement et positionné un porte-outil.

Un tel support d'outil, généralement en forme de tourelle portant plusieurs porte-outils travaillant successivement, est largement utilisé sur les machines d'usinage automatiques. Un tel attachement a même été normalisé (DIN 69880-1) et recommandée par les associations d'utilisateurs (VDI 3425-2). Une tourelle réalisée avec de tels attachements normalisés présente des logements cylindriques parallèles à l'axe de la broche de la machine, dans lesquels viennent se loger les queues cylindriques des porte-outils (DD-A-110623). Ces queues sont munies d'un méplat présentant une denture transversale destinée à coopérer avec un coin de serrage qui retient le porte-outil et le plaque contre la tourelle. Les outils peuvent être pré-réglés sur leur porte-outil avant la fixation du porte-outil sur la tourelle. Le positionnement angulaire du porte-outil sur la tourelle est assuré par un doigt pénétrant dans un trou de la face d'appui du porte-outil. De manière à assurer la pénétration de ce doigt dans le trou du porte-outil, un jeu d'au moins 0,05 mm est nécessaire, jeu qui nuit à la précision du positionnement du porte-outil, c'est-à-dire de l'outil, sur la tourelle. D'autre part, le porte-outil fait entièrement saillie sur la tourelle, augmentant l'encombrement et le poids de celle-ci et limitant parfois le travail de l'outil sur la machine. En outre, la mise en place et l'enlèvement automatique des porte-outils de la tourelle s'avèrent assez difficiles car il est nécessaire d'effectuer dans la plupart des cas deux mouvements, l'un pour amener le porte-outil en face de son logement et le second, perpendiculaire au premier, pour l'introduire dans son logement. Au surplus, la réalisation d'un système de préhension des porte-outils est malaisée en raison de la difficulté de réalisation d'attaches communes à tous les types de porte-outils. Enfin, les dents du coin de serrage doivent être totalement dégagées des dents de la queue du porte-outil pour permettre l'extraction de celui-ci.

La présente invention a pour but de réaliser un support d'outil du type défini plus haut, dans lequel les porte-outils sont quasiment intégrés au volume de la tourelle et fixés et positionnés de façon très précise, exclusivement par des plans de référence, la configuration des logements devant en outre se prêter particulièrement bien à une mise en place et un enlèvement automatique des porte-outils à partir d'un magasin.

Le support d'outil selon la revendication 1 permet d'atteindre ce but.

L'utilisation de trois plans de référence permet de positionner le porte-outil de façon très précise, car les surfaces constituant ces plans de référence peuvent être usinées et rectifiées avec une grande précision.

Les logements en forme de créneau permettent de loger les porte-outils à l'intérieur de la tourelle, diminuant ainsi l'encombrement et le poids de cette tourelle, par rapport au système DIN 69880-1.

En outre, la distance de l'arête de coupe au corps de la tourelle étant beaucoup plus courte, la rigidité aux efforts de coupe est considérablement augmentèe.

La forme prismatique du logement et le mode de serrage permettent d'introduire le porte-outil dans son logement avec un jeu considérable, donc sans nécessiter un positionnement très précis dans le cas d'un chargement automatique et beaucoup plus facilement que dans le cas d'un attachement cylindrique à jeu minimal. Selon une forme d'exécution préférée de l'invention les plans inclinés du coin et les plans inclinès correspondants du porte-outil sont disposés parallèlement ou sensiblement parallèlement à l'axe du créneau. Cette disposition permet de dégager le porte-outil en écartant très légèrement seulement le coin de serrage, puisqu'il n'est pas nécessaire de laisser passer transversalement l'arête d'un dièdre comme c'est le cas dans l'art antérieur. Le plan incliné du porte-outil coopèrant avec le coin est de préférence légèrement incliné en direction de l'entrèe du logement de telle sorte que le porte-outil n'est pas seulement retenu par frottement, mais également par coincement, empêchant ainsi un arrachage accidentel du porte-outil. Une inclinaison de 1° est suffisante. Cette exécution permet un échange très rapide des portes-outils.

Le dessin annexé représente, à titre d'exemple, une forme d'exécution de l'invention ainsi que des variantes de celle-ci.

La figure 1 représente une vue de face d'une tourelle à porte-outils.

La figure 2 est une vue de côté selon la direction A, de la figure 1, de la même tourelle, avec un seul porte-outil et sans outil.

La figure 3 est une demi-vue en coupe selon III-III de la figure 1, le porte-outil étant représenté non coupé.

Les figures 4 et 5 sont des dessins de principe illustrant le positionnement du porte-outil dans la tourelle, la figure 4 correspondant à la position du porte-outil dans la figure 1 et la figure 5 correspondant à la position du porte-outil sur la figure 2.

Les figures 6 à 8 représentent une variante d'exécution des plans inclinés de serrage.

La figure 9 est une vue partielle, analogue à la figure 1, d'une variante d'exécution des moyens de serrage du coin.

La figure 10 est une vue selon la direction A de la figure 9.

La figure 11 est une en coupe selon XI-XI de la figure 9, en position serrée.

La figure 12 est une vue analogue à la figure 11, en position desserrée.

La figure 13 est une vue de détail selon A de la figure 1.

La figure 14 est une vue en coupe selon XIV-XIV de la figure 13.

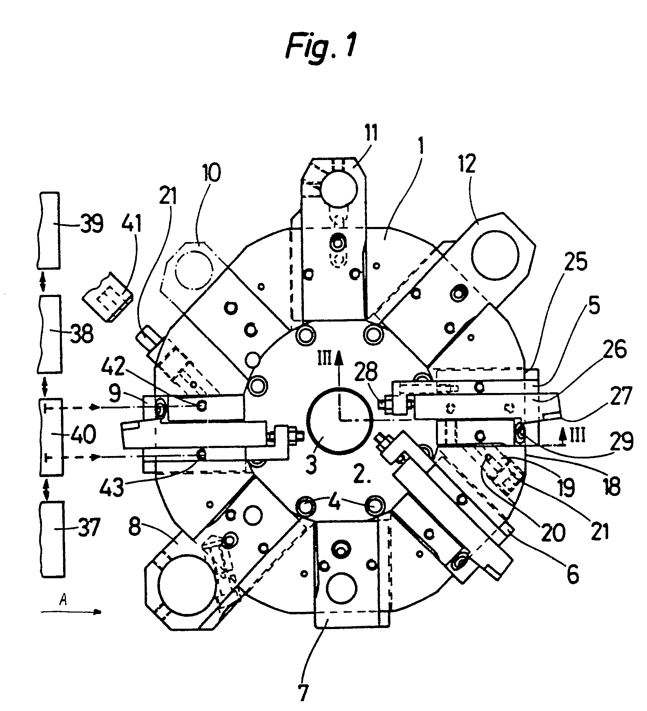

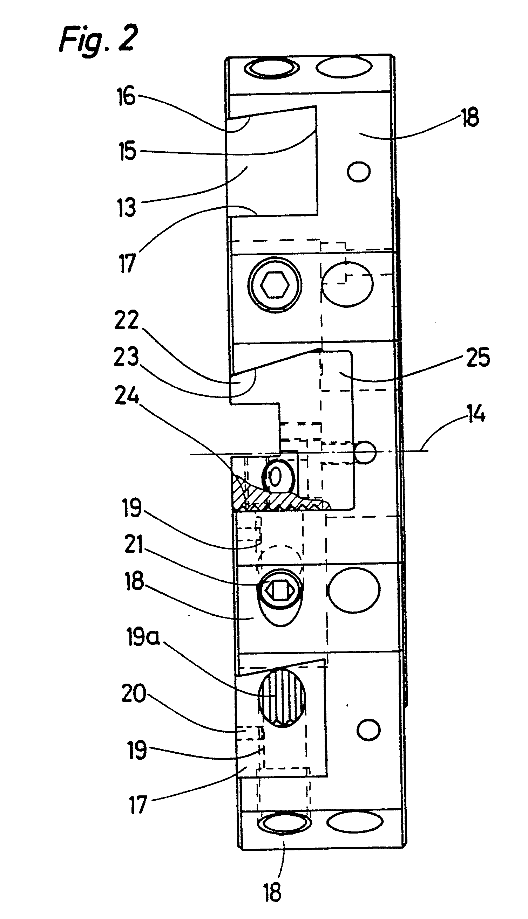

La tourelle représentèe à la figure 1 est de forme générale octogonale. Elle présente une couronne 1 entourant une creusure centrale 2 constituant le plateau de fixation de la tourelle et présentant un alésage central 3 de centrage et des trous de fixation 4. Cette tourelle est destinée à porter huit porte-outils 5 à 12. A cet effet la couronne 1 est munie de huit logement identiques 13 en forme de créneau (fig. 2), de forme prismatique et s'étendant radialement relativement à l'axe 14 de la tourelle. Ces creneaux ont un profil en demi-queue d'aronde. Le fond des créneaux est constitué par une face plane rectifiée 15 constituant une première face de référence. L'un des côtés du créneau est constitué par une face oblique 16 également rectifiée constituant une deuxième face de référence. Le second côté du crèneau 17 est constitué par un plan parallèle à l'axe de la tourelle. Il n'a pas de rôle d'appui, n'a donc pas besoin d'être rectifié et pourrait d'ailleurs être oblique. L'extrémité radiale extérieure du créneau 13 débouche sur un plan 18 perpendiculaire à l'axe du créneau. La surface 18 est rectifiée et constitue un troisième plan de référence. Dans la face 17 de chaque creneau dèbouche un trou oblique dans lequel est monté un coin de serrage 19 dont l'extrémité présente une denture 19a constituée par une rangèe de plans inclinés, de manière connue. Ce coin 19 présente une rainure longitudinale dans laquelle s'engage une goupille 20 qui l'empêche de tourner. Le coin 19 est serré au moyen d'une vis 21.

Tous les porte-outils présentent une partie prismatique 22 de forme correspondante à la forme des créneaux 13 et plus particulièrement une face oblique 23 rectifiée destinée à venir s'appuyer contre la face rectifiée 16 du créneau, une face rectifiée destinée à venir, s'appuyer contre le fond rectifié 15 du créneau et une face parallèle au troisième côté 17 du créneau et munie d'une denture 24 s'étendant sensiblement parallèlement à l'axe du prisme et dans laquelle vient s'engager l'extrémité dentelée 19a du coin de serrage. Chaque porte-outil présente en outre un épaulement 25 perpendiculaire à l'axe du prisme et dont la surface rectifiée vient s'appuyer contre la face rectifiée 18 de la tourelle.

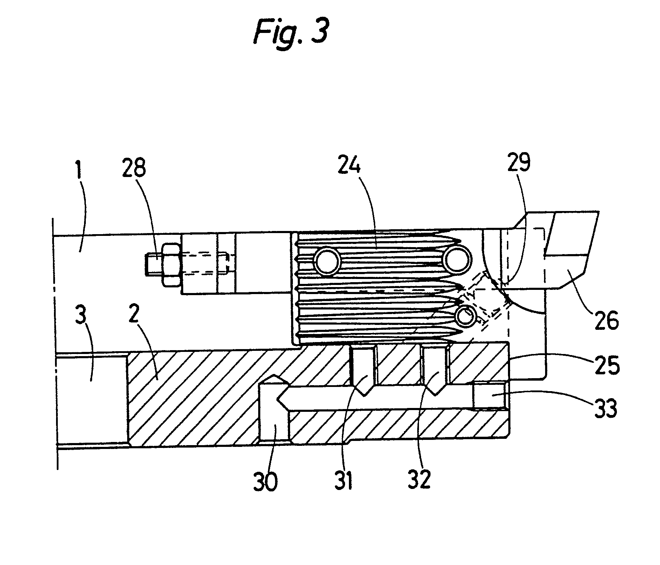

Les autres caractéristiques du porte-outil sont adaptées au type d'outil à porter et peuvent dès lors différer d'un porte-outil à l'autre, comme ceci est illustré par les porte-outils 5 et 7, figure 1. Par exemple, le porte-outil 5 est destiné à porter un burin ou porte-plaquette 26 destiné à travailler radialement à l'axe 27 de la broche de la machine-outil. Ce burin est serré de manière connue au moyen de vis et sa position axiale et radiale dans le porte-outil peut être pré-réglée au moyen des vis-butées 28. Des canaux sont prévus sur le porte-outil et sur la tourelle pour raccorder automatiquement une buse d'arrosage 29 à une entrée 30 (fig. 3) prévue sur la tourelle pour l'amenée d'un liquide de refroidissement. La figure 3 représente trois possibilités de connexion 31, 32 et 33, selon le type de porte-outil. A titre d'exemple, le porte-outil 7 est du type destiné à recevoir un outil à queue cylindrique fixé parallèlement à l'axe de la tourelle. C'est également le cas des porte-outils 8, 10, 11 et 12 représentés schématiquement.

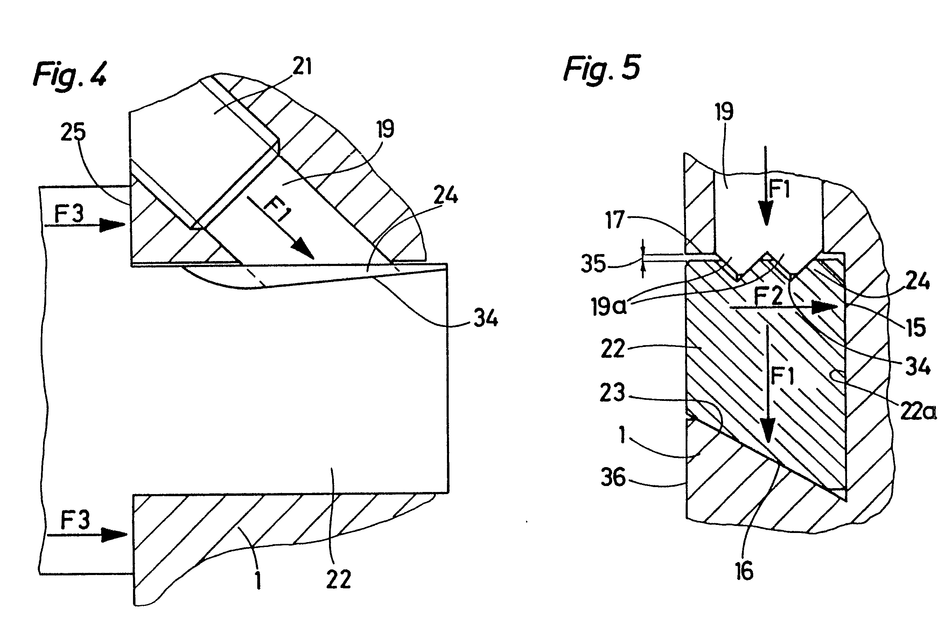

Le principe du positionnement et du serrage est illustré plus clairement par les figures 4 et 5 qui représentent schématiquement le porte-outil dans son logement. Pour simplifier, on a représenté seulement deux plans inclinés 19a coopérant avec deux plans inclinés 24 du porte-outil. Ces derniers ne sont pas exactement parallèles à l'axe du prisme constituant le logement, mais sont légèrement inclinés en direction de l'extrémité extérieure des logements, les arêtes 34 des dièdres de la denture 24 formant un angle de 1° avec la direction de l'axe du prisme. Le porte-outil est introduit librement dans son logement 13 avec un jeu suffisant 35, de manière à venir en butée par son épaulement 25 contre le plan de référence 18. Le coin 19 est ensuite serré au moyen de la vis 21, de telle sorte qu'il agit sur le porte-outil avec une force oblique F1. Cette force a le triple effet suivant: elle plaque la face oblique 23 du porte-outil contre le plan incliné de référence 16 avec une force F1; par les plans inclinés 24 et le plan incliné 16 elle plaque le porte-outil contre la face de référence 15 avec une force F2; par une composante F3 elle plaque enfin les épaulements rectifiés 25 contre la troisième face de référence 18. La légère pente des arêtes 34 assure un coincement qui empêche tout arrachage accidentel du porte-outil. Le porte-outil est ainsi parfaitement maintenu et positionné selon trois axes.

De nombreuses variantes d'exécution sont bien entendu possible. Par exemple, au lieu d'utiliser le fond 15 du créneau comme plan de référence, il serait possible d'utiliser la face frontale 36 de la tourelle 1. Au lieu d'une denture 24 coopérant avec une denture 19a du coin de serrage, il serait possible de ménager un seul plan incliné sur le coin de serrage et sur le porte-outil.

Selon une variante d'exécution, les logements prismatiques de la tourelle pourraient être disposés parallèlement à l'axe de la tourelle, les créneaux s'ouvrant dans ce cas radialement.

Il a été admis jusqu'ici que la tourelle était cylindrique, mais elle pourrait avoir toute autre forme, en particulier tronconique, les logements étant disposés sur la surface tronconique, par exemple.

Le dispositif se prête particulièrement bien à un chargement et déchargement automatique des porte-outils. Pour l'illustrer, on a représenté schématiquement un magasin de porte-outils 37, 38, 39 disposé parallèlement à la machine-outil. Supposons par exemple qu'on désire échanger le porte-outil 9. Celui-ci est amené en face du magasin qui présente à cet endroit une case libre 40. Un automate vient saisir avec une clé 41 le carré de la vis 21 et desserre le coin 19. Compte tenu de la disposition longitudinale des rainures 24, il suffit de dévisser très peu la vis 21, par exemple un tour avec une vis à pas fin pour permettre l'extraction du porte-outil. Un bras vient saisir le porte-outil par une attache fixée dans les deux trous 42 et 43 et le retire de son logement. L'automate amène alors un autre porte-outil identique ou différent, tel que 37 ou 38 en face du logement, introduit le nouveau porte-outil dans le logement et serre la vis 21. Un simple mouvement radial suffit donc pour échanger le porte-outil.

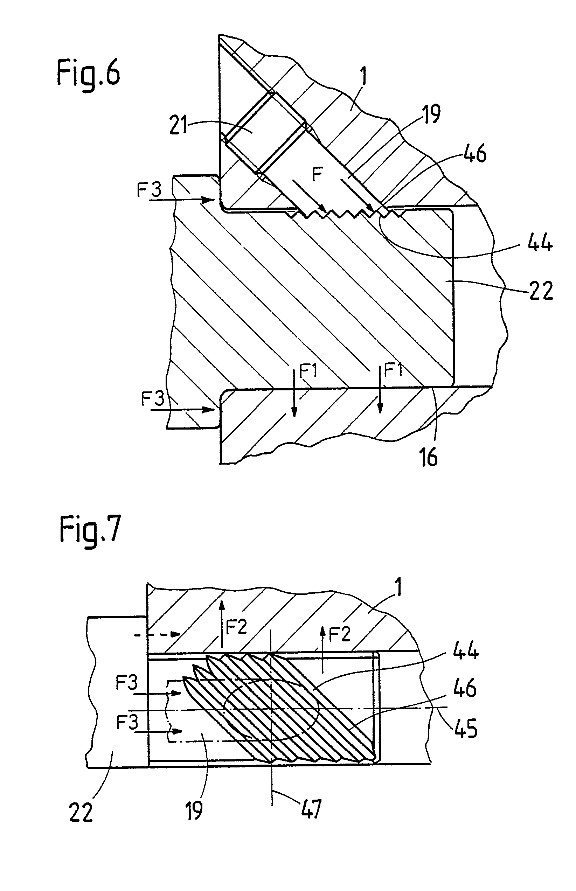

Selon une variante d'exécution représentée aux figures 6 à 8 les plans inclinés 44 coopérant avec le coin 19 pour assurer le serrage sont orientés obliquement à l'axe 45 du créneau prismatique et obliquement relativement au troisième plan de référence 15. Les arêtes 46 des dièdres sont donc également obliques relativement à l'axe 47 du logement. Selon les angles de ces inclinaisons on obtient des composantes de force différentes selon les trois directions orthogonales correspondant à la direction des forces F1, F2 et F3. La composante F3 est sensiblement plus élevée que dans la forme d'exécution selon les figures 4 et 5 et le porte-outil est mieux retenu axialement. Le coin de serrage 19 pourrait être également dirigé obliquement relativement au plan de référence 15 pour augmenter la composante F2. Le coin de serrage a été représenté muni d'une partie filetée mais il pourrait être serré par d'autres moyens tels qu'un axe excentrique ou par des rondelles élastiques préchargées.

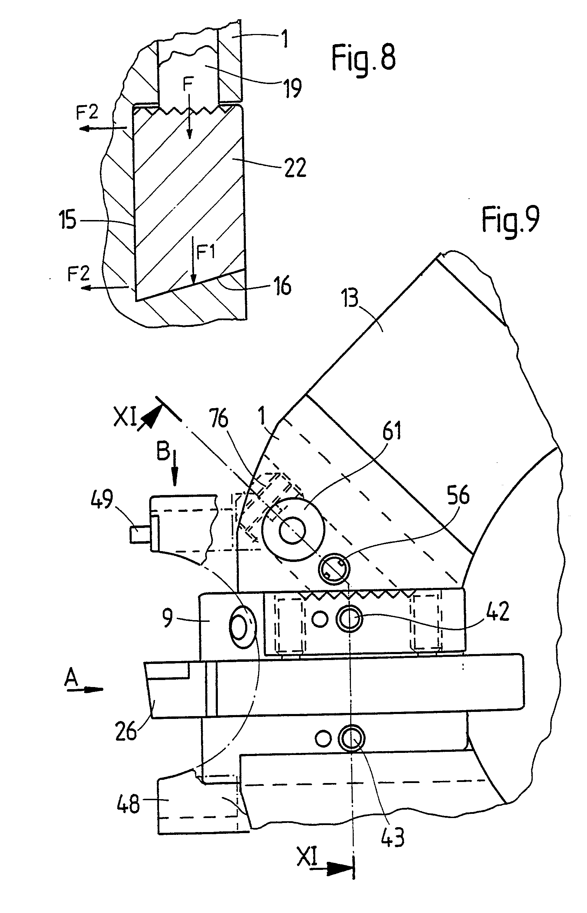

Les figures 9 à 14 représentent un mode d'actionnement du coin de serrage permettant une commande automatique particulièrement rapide.

Les éléments communs avec la forme d'exécution précédente ont été désignés par les mêmes signes de référence. On retrouve la couronne 1 et ses logements 13 dans lesquels sont disposés des porte-outils 9. Les porte-outils 9 sont exécutés selon les figures 6 à 8. Il est prévu un support de préhension 46, sur chaque porte-outil, pour le changement automatique de ceux-ci. Ce support 48, vissé sur le porte-outil en 42 et 43, porte un axe de commande 49, actionné par le bras de manutention non représenté, pour la commande du verrouillage du porte-outil, c'est-à-dire du coin de serrage. Ce coin de serrage 50 présente une denture du type selon les figures 6 à 8, Il est retenu dans son logement par un ressort-fil 51 qui le traverse par un passage 52 dont l'entrée et la sortie présentent un profil oblong, de telle sorte que le ressort 51 agit non seulement comme ressort de rappel mais également comme ressort d'orientation et de retenue. L'une des extrémités du ressort 51 est chassée dans le trou axial d'une pièce cylindrique 53 présentant une fente 54 sur une partie de sa longueur pour le guidage du ressort 51 lors de sa flexion. La pièce 53 est chassée avec son ressort au fond d'un trou borgne 55 de la couronne 1.

L'autre extrémité du ressort s'appuie dans un bouchon fileté 56. En position de repos (fig, 12) le ressort 51 est rectiligne et le coin de serrage 50 est dégagé du porte-outil 9. Le coin de serrage 50 présente un premier plan incliné 57 présentant une inclinaison d'environ 45° relativement à la direction de déplacement 58 du coin de serrage, et un second plan incliné 59, incliné de quelques degrés relativement à l'axe 60 de commande du coin de serrage perpendiculaire à l'axe 58. Ce plan incliné 59 est un plan de multiplication de la force de serrage.

Le coin de serrage 50 est actionné par l'intermédiaire d'un second coin 61 coulissant selon l'axe 60 et muni d'une pince élastique 62 destinée à coopérer avec une tête 63 de forme conjuguée solidaire du piston 64 d'un cylindre hydraulique à double effet 65 fixé au diviseur automatique 66. Le cylindre hydraulique 65 est muni d'un tube de protection 67 entourant le piston 64 et la tête 63. L'extrémité du tube 67 est munie d'une garniture 68 qui vient en contact avec la couronne 1, autour de la pince 62 du second coin d'actionnement 61. On évite ainsi que des salissures pénètrent dans la pince 62 et en perturbent le fonctionnement qui sera décrit plus loin. La tête 63 présente en arrière une partie tronconique 69 dont l'angle détermine la force de serrage, en liaison avec l'élasticité de la pince 62 du coin 61, tandis que son extrémité présente une partie tronconique 70 facilitant l'introduction de la tête 63 dans la pince 62. Le plan incliné 71 du coin d'actionnement 61 est parallèle au plan incliné 59 du coin de serrage 50. Ce coin 61 présente un dégagement 72 permettant le retrait du coin de serrage 50 dégagement présentant d'un côté un plan incliné 73 formant came pour l'actionnement du coin de serrage 50. Le coin 61 présente en outre une rainure 74 coopérant avec un doigt 75 solidaire d'un bouchon vissé 76 pour le guidage du coin 61.

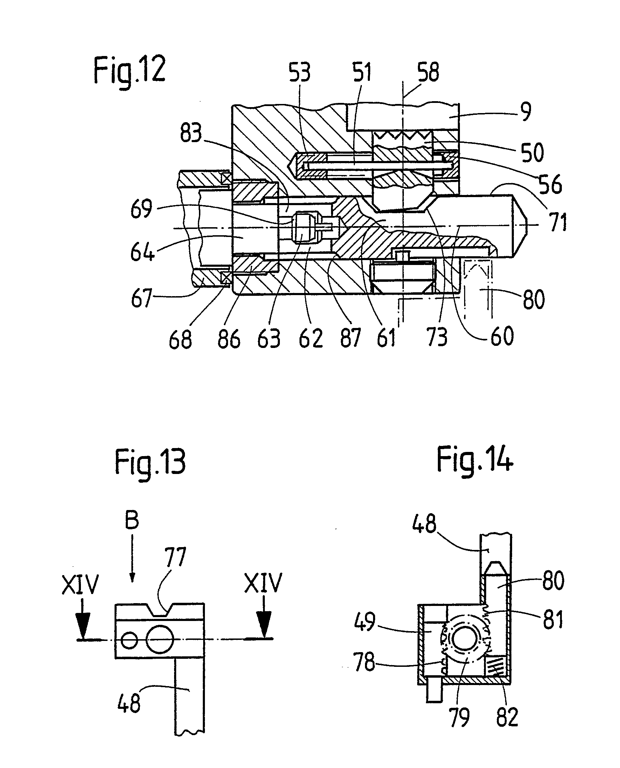

Aux figures 13 et 14 est représenté un détail du support de préhension 48. Ce support 48 présente deux rainures en V 77 et 77' destinées à recevoir la pince du bras de manutention. Vue en coupe selon XIV-XIV, la partie représentée de face à la figure 13, montre l'axe de commande du verrouillage 49 munie d'une crémaillère 78 transmettant par un engrenage hélicoïdal 79 le mouvement de l'axe 49 à un doigt 80 muni d'une crémaillère 81 pour le verrouillage du coin de serrage 61. Le doigt 80 est maintenu en avant par un ressort de rappel 82.

Le dispositif fonctionne de la manière suivante: Le porte-outil 9 est saisi par la pince du bras de manutention, par les rainures 77 et 77' de son support de préhension. Lors de cette préhension l'axe de commande 49 est poussé, ce qui provoque le retrait du doigt de verrouillage 80.

Le cylindre hydraulique 65 engage la tête 63 de son piston dans la pince 62 du coin 61. Lors de cette introduction le coin 61 n'est pas entrainé, car il est fortement bloqué par son plan incliné 71. La face frontale 83 du piston 64 vient ensuite repousser le coin 61 dans la position représentée à la figure 12. Ce mouvement est limité par la butée d'une portée 85 du piston 64 contre la couronne 1, plus précisément contre un écrou 80. Le porte-outil est extrait: le bras de manutention se retourne et introduit un nouveau porte-outil.

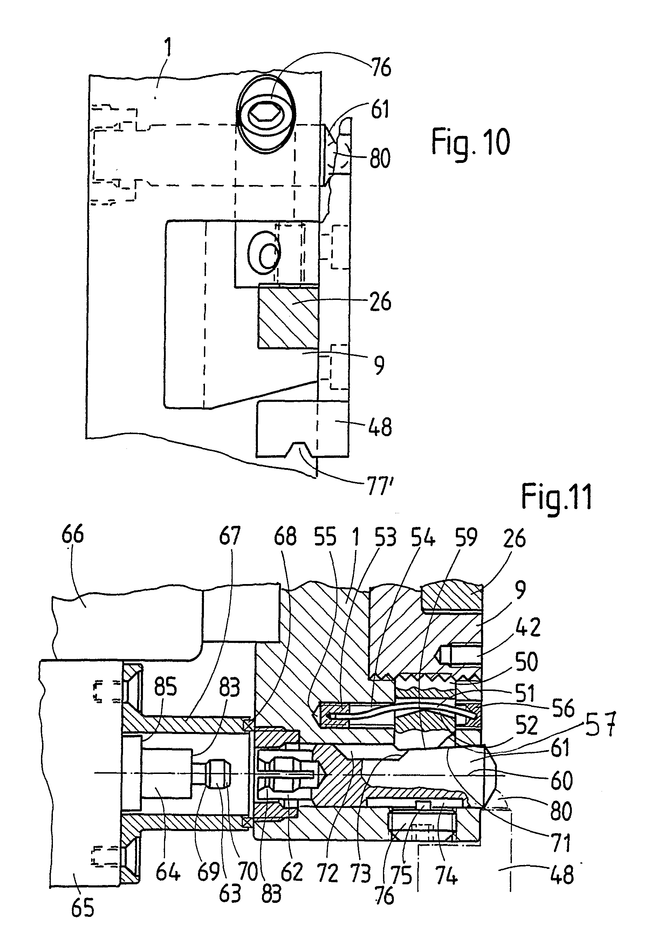

Partant de la position représentée à la figure 12, le piston 64 recule en entrainant le coin 61. La tête 63, par sa partie tronconique 69 exerce une traction sur la pince 62. L'angle de la partie tronconique 69 est calculé de telle sorte qu'on obtient une force de serrage suffisante, après quoi la pince s'ouvre en libérant la tête 63 (fig. 11).

La pince du bras de manutention s'ouvre, l'axe de commande 49 est libéré et le coin 61 est à nouveau verrouillé par le doigt de verrouillage 80 dont l'extrémité conique coopère avec l'extrémité conique du coin 61 pour absorber les différences de position axiale du coin de serrage. Lors de l'ouverture de la pince du bras de manutention on a donc un verrouillage automatique du coin 61 par l'écartement du bras de manutention.

La durée du changement automatique d'un porte-outil est de 3 à 4 secondes.

En l'absence de porte-outil, la course du coin 61 est limitée par l'écrou 86 contre lequel il vient buter par un épaulement 87.

Lors du premier serrage d'un porte-outil le coin 61 est retenu par le doigt 75, lors de l'introduction de la tête 63 dans la pince 62.

Le système de serrage-desserrage automatique est entiérement incorpporé au volume de la tourelle. Le cylindre hydraulique, fixé au diviseur dans une position adaptée à la machine, permet un serrage et desserrage par un mouvement simple, court, rapide et sûr. L'angle très faible des plans inclinés 59 et 71 assure une importante multiplication de la force et un auto-coincement efficace, au surplus verrouillé, rendant impossible tout desserrage accidentel.

## Revendications

1. Support d'outil pour machine-outil comprenant un corps de support monolithique (1) présentant au moins un logement (13) dans lequel est fixé amoviblement et positionné un porte-outil, (5), caractérisé par le fait que ledit logement (13) est en forme de créneau de forme prismatique et de profil fermé à la manière d'une queue d'aronde, ce créneau et le corps (1) définissant trois plans d'appui et de référence pour le porte-outil, à savoir un premier plan de référence constitué par une face latérale inclinée (16) du créneau, un deuxiéme plan de référence (18) transversal à l'axe du créneau et un troisième plan de référence constitué par le fond (15) ou les bords extérieurs (36) du créneau, et par le fait que le porte-outil amovible présente une partie prismatique (22) de forme correspondante à celle de son logement et plus precisement un plan incliné (23) parallèle au premier plan de référence ( 16) et destiné à s'appuyer sur celui-ci, au moins un épaulement plan (25) destiné à s'appuyer sur le deuxième plan de référence (18) et une face plane (22a) destinée à s'appuyer sur le troisième plan de référence (15), le côté de la partie prismatique du porte-outil opposé au premier plan, incliné, de référence présentant au moins un plan incliné (24; 44;) coopérant avec un coin de serrage (19; 50) monté coulissant dans ledit corps dans une direction oblique relativement à l'axe du créneau prismatique et serrable par un organe de serrage (21; 61) de telle sorte que la pression exercée par le coin de serrage sur le plan incliné se décompose en trois forces (F1, F2, F3) ayant pour effet de plaquer les plans d'appui du porte-outil contre les plans de référence respectifs du corps et de son créneau.

2. Support d'outil selon la revendication 1, caractérisé par le fait que le plan inclinè (24) du porteoutil coopérant avec le coin de serrage est consitué par au moins une face d'une rainure en forme de dièdre dont l'arète (34) est inclinée vers l'axe du créneau prismatiqueen direction de l'entrée du logement.

3. Support d'outil selon la revendication 1, caractérisé par le fait que le plan incliné (44) du porteoutil coopérant avec le coin de serrage est oblique relativement à l'axe (45) du créneau prismatique et relativement au troisième plan de référence (15).

4. Support d'outil selon la revendication 3, caractérisé par le fait que le coin de serrage est également orienté obliquement relativement à l'axe (45) du créneau et au troisième plan de référence (15).

5. Support d'outil selon l'une des revendications 1 à 4, dont le corps est constitué par une tourelle portant plusieurs porte-outils (5-12), caractérisé par le fait que la tourelle présente plusieurs logements prismatiques (13) orientés radialement.

6. Support d'outil selon l'une des revendications 1 à 4, dont le corps est constitué par une tourelle portant plusieurs porte-outils, caractérisé par le fait que la tourelle présente plusieurs logements prismatiques répartis sur sa périphérie et orientés parallèlement ou obliquement à l'axe de la tourelle.

7. Support d'outil selon l'une des revendications 1 à 6, caractérisé par le fait que le coin de serrage (50) est maintenu en position dégagée par un ressort de rappel (51) et qu' il présente un plan incliné (59) coopérant avec un second coin (61) muni de moyens de saisie automatique (62) coopérant avec un piston (64) d'un vérin à double effet (65).

8. Support selon la revendication 7, caractérisé par le fait que lesdits moyens de saisie automatique sont constitués par une pince élastique (62) dans laquelle s'engage une tête (63) du piston (64), la pince (62) présentant un cran intérieur (83) contre lequel vient buter une partie tronconique (69) de la tète lors de son retrait, de maniére à entrainer le second coin (61) jusqu'à son coincement contre le coin de serrage (50).

9. Support selon la revendication 8, caractérisé par le fait que chaque porte-outil est muni d'un support de préhension (48) portant un doigt (80) de verrouillage rétractable du second coin (61), dont le retrait est actionnable par la pince du bras de manutention.

## Patentansprüche

1. Werkzeugträger für eine Werkzeugmaschine mit einem monolithischem Trägerkörper (1), der wenigstens eine Aufnahmeöffnung (13) aufweist, in welcher lösbar und positioniert ein Werkzeughalter (5) befestigt ist, dadurch gekennzeichnet, dass die erwähnte Aufnahmeöffnung (13) die Form einer Zinne von prismatischer Gestalt hat und ein geschlossenes Profil nach Art eines Schwalbenschwanzes aufweist, dass diese Zinne und der Körper (1) drei Anlage- und Bezugsebenen für den Werkzeughalter definieren, nämlich eine erste, durch eine geneigte Seitenfläche (16) der Zinne gebildete Bezugsebene, eine zweite, quer zur Achse der Zinne orientierte Bezugsebene (18) und eine dritte Bezugsebene, die durch den Boden (15) oder die äusseren Ränder (36) der Zinne gebildet ist, dass der lösbare Werkzeughalter einen prismatischen Teil (22) mit einer der Form seiner Aufnahmeöffnung entsprechenden Form und genauer eine geneigte Ebene (23), die parallel zur ersten Bezugsebene (16) liegt und dazu bestimmt ist, sich an dieser abzustützen, wenigstens eine ebene Schulter (25), die dazu bestimmt ist, sich auf der zweiten Bezugsebene (18) abzustützen, und eine ebene Fläche (22a) aufweist, die dazu bestimmt ist, sich auf der dritten Bezugsebene (15) abzustützen, und dass die der ersten geneigten Bezugsebene abgewandte Seite des prismatischen Teils des Werkzeughalters wenigstens eine geneigte Ebene (24; 44) aufweist, die mit einem Spannkeil (19; 50) zusammenwirkt, der in dem erwähnten Körper schräg zur Achse der prismatischen Zinne verschiebbar und durch ein Spannorgan (21, 61) derart spannbar ist, dass der vom Spannkeil auf die geneigte Ebene ausgeübte Druck in drei Kräfte (F1, F2, F3) zerlegt wird, durch welche die Auflageebenen des Werkzeughalters gegen die betreffenden Bezugsebenen des Körpers und seiner Zinne zur Anlage gebracht werden.

2. Werkzeugträger nach Anspruch 1, dadurch gekennzeichnet, dass die geneigte Ebene (24) des Werkzeughalters, die mit dem Spannkeil zusammenwirkt, durch wenigstens eine Fläche einer Nut in Form eines Dieders gebildet wird, dessen Kante (34) gegen die Achse der prismatischen Zinne in Richtung auf den Eingang der Aufnahmeöffnung geneigt ist.

3. Werkzeugträger nach Anspruch 1, dadurch gekennzeichnet, dass die geneigte Ebene (44) des Werkzeughalters, die mit dem Spannkeil zusammenwirkt, schräg zur Achse (45) der prismatischen Zinne und zur dritten Bezugsebene (15) orientiert ist.

4. Werkzeugträger nach Anspruch 3, dadurch gekennzeichnet, dass der Spannkeil ebenfalls schräg zur Achse (45) der Zinne und zur dritten Bezugsebene (15) orientiert ist.

5. Werkzeugträger nach einem der Ansprüche 1 bis 4, dessen Körper aus einem mehrere Werkzeughalter (5 bis 12) tragendem Revolverkopf besteht, dadurch gekennzeichnet, dass der Revolverkopf mehrere, radial orientierte prismatische Aufnahmeöffnungen (13) aufweist.

6. Werkzeugträger nach einem der Ansprüche 1 bis 4, dessen Körper aus einem mehrere Werkzeughalter tragenden Revolverkopf besteht, dadurch gekennzeichnet, dass der Revolverkopf mehrere prismatische Aufnahmeöffnungen aufweist, die auf seinem Umfang verteilt und parallel oder schräg zur Achse des Revolverkopfes orientiert sind.

7. Werkzeugträger nach einem der Ansprüche 1 bis 6, dadurch gekennzeichnet, dass der Spannkeil (50) durch eine Rückstellfeder (51) in ausgerückter Lage gehalten wird und dass er eine geneigte Ebene (59) aufweist, die mit einem zweiten Keil (61) zusammenwirkt, der mit Mitteln zum automatischen Ergreifen (62) versehen ist, welche mit einem Kolben (64) eines doppelwirkenden Zylinders (65) zusammenwirken.

8. Werkzeugträger nach Anspruch 7, dadurch gekennzeichnet, dass die erwähnten Mittel zum automatischen Ergreifen aus einer elastischen Zange (62) bestehen, in welche ein Kopf (63) des Kolbens (64) eingreift, und dass die Zange (62) eine innere Kerbe (63) hat, gegen welche ein kegelstumpfförmiger Teil (69) des Kopfes beim Zurückziehen desselben derart anschlägt, dass der zweite Keil (61) mitgenommen wird, bis er gegen den Spannkeil (50) verkeilt ist.

9. Werkzeugträger nach Anspruch 8, dadurch gekennzeichnet, dass jeder Werkzeughalter mit einem Greifsupport (48) versehen ist, welcher einen vom zweiten Keil (61) zurückziehbaren Verriegelungsfinger (80) trägt, der durch die Zange des Handhabungsarms betätigbar ist.

**Claims**

1. Tool support for a machine tool, comprising a monolithic supporting body (1) having at least one receptacle (13), in which a toolholder (5) is fastened removably and positioned, characterized in that the said receptacle (13) is in the form of an indentation of prism-shaped form and with a profile closed in the manner of a dovetail, this indentation and the body (1) defining three bearing and reference planes for the toolholder, namely a first reference plane formed by an inclined lateral face (16) of the indentation, a second reference plane (18) transverse relative to the axis of the indentation, and a third reference plane formed by the bottom (15) or the outer edges (36) of the indentation, and in that the removable toolholder has a prism-shaped part (22) of a form corresponding to that of its receptacle and, more specifically, an inclined plane (23) parallel to the first reference plane (16) and intended to bear on the latter, at least one plane shoulder (25) intended to bear on the second reference plane (18), and a plane face (22a) intended to bear on the third reference plane (15), the side of the prism-shaped part of the toolholder opposite the first inclined reference plane having at least one inclined plane (24; 44) interacting with a clamping key (19; 50) mounted slideably in the said body in an oblique direction relative to the axis of the prism-shaped indentation and clampable by means of a clamping member (21; 61), in such a way that the pressure exerted by the clamping key on the inclined plane is split up into three forces (F1, F2, F3), the effect of which is to lay the bearing planes of the toolholder against the respective reference planes of the body and of its indentation.

2. Tool support according to Claim 1, characterized in that the inclined plane (24) of the toolholder interacting with the clamping key is formed by at least one face of a groove in the form of a dihedron, the edge (34) of which is inclined towards the axis of the prism-shaped indentation in the direction of the entrance of the receptacle.

3. Tool support according to claim 1, characterized in that the inclined plane (44) of the toolholder interacting with the clamping key is oblique relative to the axis (45) of the prism-shaped indentation and relative to the third reference plane (15).

4. Tool support according to Claim 3, characterized in that the clamping key is likewise oriented obliquely relative to the axis (45) of the indentation and relative to the third reference plane (15).

5. Tool support according to one of Claims 1 to 4, the body of which consists of a turret carrying several toolholders (5-12), characterized in that the turret has several prism-shaped receptacles (13) directed radially.

6. Tool support according to one of Claims 1 to 4, the body of which consists of a turret carrying several toolholders, characterized in that the turret has several prism-shaped receptacles distributed over its periphery and directed parallel to or obliquely relative to the axis of the turret.

7. Tool support according to one of Claims 1 to 6, characterized in that the clamping key (50) is held in the released position by means of a restoring spring (51) and has an inclined plane (59) interacting with a second key (61) equipped with automatic grasping means (62) interacting with a piston (64) of a double-acting jack (65).

8. Support according to Claim 7, characterized in that the said automatic grasping means consist of an elastic gripper (62), in which a head (63) of the piston (64) engages, the gripper (62) having an inner notch (83), against which a frustoconical part (69) of the head butts during its retraction, so as to drive the second key (61) until it is wedged against the clamping key (50).

9. Support according to Claim 8, characterized in that each toolholder is equipped with a prehension support (48) carrying a finger (80) for the retractable locking of the second key (61), the retraction of which can be actuated by means of the gripper of the handling arm.

# Fig. 1

0 114 443

Fig. 2

2

## Fig. 3

*Fig. 5*

*Fig. 4*

Fig.6

Fig.7

Fig.8

Fig.9

Fig. 10

Fig. 11

Fig.12

53  51  58

9

83

50

56

69

71

64

67

68  86  63  62  87  61  73  60

80

Fig.13

Fig.14

B

48

77

80

XIV          XIV

81

49

78

48

79  82